# EUROPEAN PATENT SPECIFICATION

(11) **EP 4 422 158 B1**
(45) Date of publication and mention of the grant of the patent: **16.09.2026**
(21) Application number: 23191011.8
(22) Date of filing: 11.08.2023
(51) Int. Cl.: H04N 1/00, G06F 3/12, G03G 15/00

(54) **INFORMATION PROCESSING SYSTEM AND PROGRAM**
INFORMATIONSVERARBEITUNGSSYSTEM UND -PROGRAMM
SYSTÈME ET PROGRAMME DE TRAITEMENT D'INFORMATIONS

(30) Priority: 27.02.2023 JP 2023028576
(43) Date of publication of application: 28.08.2024
(73) Proprietor: FUJIFILM Business Innovation Corp., Minato-ku Tokyo (JP)
(72) Inventor: MIYAMORI, Shinya, Yokohama-shi, Kanagawa (JP); TANAKA, Yuki, Yokohama-shi, Kanagawa (JP)
(74) Representative: Kurig, Thomas

(56) References cited:
- JP-A- 2020 019 206
- US-A1- 2008 126 870
- US-A1- 2018 063 366
- US-A1- 2018 141 358

## Description

### BACKGROUND OF THE INVENTION

### (i) Field of the Invention

The present invention relates to an information processing system and a program.

### (ii) Description of Related Art

JP2020-198493A discloses an information forming apparatus including a reading unit that reads a printed matter and outputs image data, a determination unit that determines, based on the image data, whether the printed matter is a printed matter of a transmission target output by the image forming apparatus, and a communication unit that transmits the image data to a server apparatus in a case where the determination unit determines that the printed matter is the transmission target.

JP2015-76009A discloses a process of receiving an input of image reproduction information regarding image reproduction of each of a plurality of image forming apparatuses. US 2018/141358 A1 discloses a printer including a detection unit configured to detect an error, a storage unit configured to store in itself error information corresponding to the error, a communication unit configured to communicate with an external apparatus, a printing unit configured to perform printing on a printing medium, and a control unit.
US 2008/126870 A1 discloses a maintenance system, wherein, in the management terminal, an input receiving unit receives an input of management information related to a condition of the managed machine, a second transmitting unit transmits the management information related to the condition of the managed machine to the server, in the server, a receiving unit receives the information related to the result of self-diagnosis transmitted and the management information transmitted, a memory unit stores the information related to the result of self-diagnosis and the management information on a database, a control unit analyzes a trouble-coping history of the managed machine which has a same type, and controls so as to output a analysis result of the trouble-coping history to one of the managed machine and the management terminal.
US 2018/063366 A1 discloses an image output apparatus including an image printer, a history memory, and a history display. The image printer prints an image based on image data in accordance with adjunct data for each job including a set of the image data expressing one set of images and the adjunct data necessary for image printing based on, the image data. The history memory records and stores printing history of printing performed, for each job in the image printer. The printing history includes recording of whether or not any one of predetermined types of errors has occurred and the type of error when occurred. The history display displays the history such that an icon corresponding to an error occurred in a job is displayed in correspondence with the job. The icon is one of icons respectively corresponding to groups obtained by classifying the predetermined types of errors into multiple groups.
JP2020019206 A discloses a technique for diagnosing an image forming apparatus based on analyzing printed test charts and which provides a common screen for displaying diagnosis results with suggested treatment information to be performed.

### SUMMARY OF THE INVENTION

The treatment performed on the image forming apparatus may be related to the quality of an image formed by the image forming apparatus. Depending on the treatment performed on the image forming apparatus, the quality of the image formed by the image forming apparatus is deteriorated or improved.

The present invention is provided in the appended claims. The following disclosure serves a better understanding of the present invention. An object of the present invention is to make it easy to grasp a relationship between a treatment performed on an image forming apparatus and quality of an image formed by the image forming apparatus, as compared with a case of generating a screen including only a diagnosis result of an image formed by the image forming apparatus.

According to a first aspect of the present disclosure, there is provided an information processing system including a processor configured to acquire a diagnosis result being a result of diagnosing an image formed on a recording medium by an image forming apparatus, acquire treatment information being information regarding a treatment performed on the image forming apparatus, and generates a screen on which the diagnosis result and the treatment information are displayed.

According to a second aspect of the present disclosure, there is provided an information processing system according to the first aspect, in which the processor may be configured to generate the screen on which the diagnosis result and the treatment information are displayed to be arranged in chronological order, in generating the screen.

According to a third aspect of the present disclosure, there is provided an information processing system according to the first or second aspect, in which the processor may be configured to generate the screen on which the diagnosis result is represented by a numerical value, in generating the screen.

According to a fourth aspect of the present disclosure, there is provided an information processing system according to any one of the first to third aspects, in which the processor may be configured to generate the screen on which the diagnosis result is represented by a graph, in generating the screen.

According to a fifth aspect of the present disclosure, there is provided an information processing system according to the fourth aspect, in which the processor may be configured to generate the screen on which the diagnosis result and the treatment information are displayed on the graph and the diagnosis result and the treatment information displayed on the graph are arranged in chronological order, in generating the screen.

According to a sixth aspect of the present disclosure, there is provided an information processing system according to any one of the first to fifth aspects, in which the processor may be configured to generate the screen on which a symbol indicating a type of treatment specified by the treatment information is displayed at a display location of the treatment information, in generating the screen.

According to a seventh aspect of the present disclosure, there is provided an information processing system according to any one of the first to sixth aspects, in which the processor may be configured to generate the screen on which treatment information for a treatment specified by a user is displayed and treatment information for a treatment not specified by the user is not displayed, in generating the screen.

According to an eighth aspect of the present disclosure, there is provided an information processing system according to any one of the first to seventh aspects, in which the processor may be configured to generate the screen including information regarding a date and time on which a diagnosis as a base of obtaining the diagnosis result is performed, and information regarding a date and time on which the treatment is performed, in generating the screen.

According to a ninth aspect of the present disclosure, there is provided an information processing system according to any one of the first to eighth aspects, in which the processor may be configured to generate the screen including information indicating whether the treatment performed on the image forming apparatus is a treatment having a positive influence or a treatment having a negative influence on the image forming apparatus, in generating the screen.

According to a tenth aspect of the present disclosure, there is provided an information processing system according to any one of the first to ninth aspects, in which the processor may be configured to generate the screen including the treatment information, the diagnosis result of the diagnosis performed before a specific treatment that is a treatment specified by the treatment information, and the diagnosis result of the diagnosis performed after the specific treatment, in generating the screen.

According to an eleventh aspect of the present disclosure, there is provided an information processing system according to the tenth aspect, in which the processor may be configured to generate the screen including the diagnosis result of a diagnosis performed at a closest time to time when the specific treatment is performed among diagnoses performed before the specific treatment, and the diagnosis result of a diagnosis performed at a closest time to the time when the specific treatment is performed among diagnoses performed after the specific treatment, in generating the screen.

According to a twelfth aspect of the present disclosure, there is provided an information processing system according to any one of the first to eleventh aspects, in which the processor may be configured to generate the screen on which the treatment information for a specific type of treatment among a plurality of types of treatments allowed to be performed on the image forming apparatus and the diagnosis result are displayed, in generating the screen.

According to a thirteenth aspect of the present disclosure, there is provided an information processing system according to the twelfth aspect, in which the processor may be configured to generate the screen on which the treatment information for a treatment of a type designated by a user among the plurality of types of treatments, and the diagnosis result are displayed, in generating the screen.

According to a fourteenth aspect of the present disclosure, there is provided an information processing system according to any one of the first to thirteenth aspects, in which the processor may be configured to, in a case where a treatment specified by the treatment information is a treatment of repairing the image forming apparatus, generate the screen on which a content of the repair is 41displayed, in generating the screen.

According to a fifteenth aspect of the present disclosure, there is provided a program causing a computer to realize a function of acquiring a diagnosis result being a result of diagnosing an image formed on a recording medium by an image forming apparatus, a function of acquiring treatment information being information regarding a treatment performed on the image forming apparatus, and a function of generating a screen on which the diagnosis result and the treatment information are displayed.

According to the first aspect of the present disclosure, it is possible to make it easy to grasp a relationship between a treatment performed on an image forming apparatus and quality of an image formed by the image forming apparatus as compared with a case of generating a screen including only a diagnosis result of an image formed by the image forming apparatus.

According to the second aspect of the present disclosure, it is possible to make it easy to grasp a relationship between a treatment performed on an image forming apparatus and quality of an image formed by the image forming apparatus as compared with a case where a diagnosis result and treatment information are not arranged in chronological order.

According to the third aspect of the present disclosure, it is possible to make it easy to perform comparison of a diagnosis result as compared with a case where the diagnosis result is not displayed with a numerical value.

According to the fourth aspect of the present disclosure, it is possible to make it easy to grasp a change in a diagnosis result as compared with a case where the diagnosis result is displayed in a list format.

According to the fifth aspect of the present disclosure, it is possible to make it easy to grasp a relationship between treatment information and a diagnosis result, as compared with a case where the treatment information is displayed at a position separated from a graph.

According to the sixth aspect of the present disclosure, it is possible to make it easy to grasp the type of treatment performed, as compared with a case where treatment information is displayed only by text.

According to the seventh aspect of the present disclosure, it is possible to generate a screen on which it is easy to grasp treatment information, as compared with a case where treatment information for a treatment that has not been specified by a user is also displayed on the screen.

According to the eighth aspect of the present disclosure, it is easy for the user who refers to a screen to grasp the date and time when diagnosis as a base of obtaining a diagnosis result is performed and the date and time when a treatment is performed.

According to the ninth aspect of the present disclosure, it is possible to make it easy to grasp an influence of a treatment performed on an image forming apparatus, on the image forming apparatus, as compared with a case where a screen does not include information for a treatment having a positive influence and a treatment having a negative influence.

According to the tenth aspect of the present invention, in notifying a user of treatment information, it is possible to notify the user of a diagnosis result of a diagnosis performed before a specific treatment that is a treatment specified by the treatment information, and a diagnosis result of a diagnosis performed after the specific treatment.

According to the eleventh aspect of the present disclosure, in notifying a user of treatment information, it is possible to notify the user of a diagnosis result of a diagnosis that is performed before a specific treatment that is a treatment specified by the treatment information and is performed at the closest time to time when the specific treatment is performed, and a diagnosis result of a diagnosis that is performed after a specific treatment and is performed at the closest time to time when the specific treatment is performed.

According to the twelfth aspect of the present disclosure, it is possible to notify a user of treatment information regarding a specific type of treatment among a plurality of types of treatments allowed to be performed on an image forming apparatus, and a diagnosis result.

According to the thirteenth aspect of the present disclosure, it is possible to generate a screen including treatment information for a treatment of a type desired to be displayed by a user.

According to the fourteenth aspect of the present disclosure, it is possible to generate a screen including information regarding repair performed on an image forming apparatus.

According to the fifteenth aspect of the present disclosure, it is possible to make it easy to grasp a relationship between a treatment performed on an image forming apparatus and quality of an image formed by the image forming apparatus as compared with a case of generating a screen including only a diagnosis result of an image formed by the image forming apparatus.

### BRIEF DESCRIPTION OF THE DRAWINGS

Exemplary embodiment(s) of the present invention will be described in detail based on the following figures, wherein:
Fig. 1 is a diagram illustrating an example of a diagnosis system;
Fig. 2 is a diagram illustrating an example of a hardware configuration of an information processing unit provided in a server apparatus and an image forming apparatus;
Fig. 3 is a diagram illustrating an image forming apparatus;
Fig. 4 is a diagram illustrating an example of a screen generated by a CPU;
Fig. 5 is a diagram illustrating another example of the screen generated by the CPU of the server apparatus;
Fig. 6 is a diagram illustrating still another example of the screen generated by the CPU of the server apparatus;
Fig. 7 is a diagram illustrating still yet another example of the screen generated by the CPU of the server apparatus;
Fig. 8 is a diagram illustrating still yet another example of the screen generated by the CPU of the server apparatus; and
Fig. 9 is a diagram illustrating a display example.

### DETAILED DESCRIPTION OF THE INVENTION

Hereinafter, an exemplary embodiment of the present invention will be described with reference to the accompanying drawings.

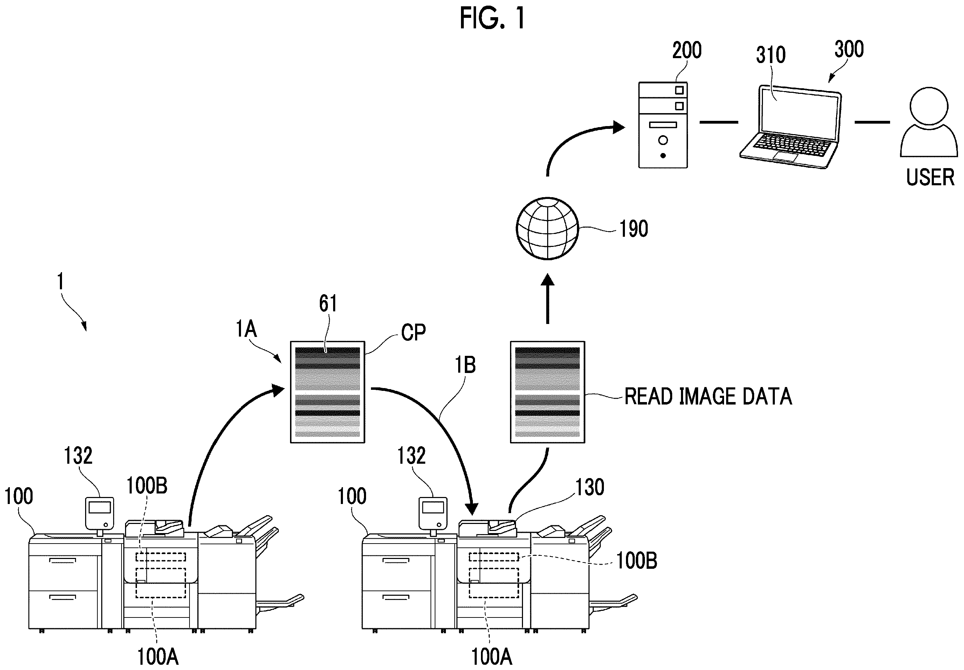

Fig. 1 is a diagram illustrating an example of a diagnosis system 1.

The diagnosis system 1 according to the present exemplary embodiment is provided with a plurality of image forming apparatuses 100 and a server apparatus 200 that is connected to each of the plurality of image forming apparatuses 100 via a communication line 190. In Fig. 1, one image forming apparatus 100 among a plurality of image forming apparatuses 100 is displayed.

Further, the diagnosis system 1 in the present exemplary embodiment is provided with a user terminal 300 that is connected to the server apparatus 200 and receives an operation from a user.

In the present exemplary embodiment, in the server apparatus 200 as an example of an information processing system, diagnosis of each image forming apparatus 100 is performed.

The user terminal 300 is provided with a display device 310. The user terminal 300 is realized by a computer. Examples of the form of the user terminal 300 include a personal computer (PC), a smartphone, and a tablet terminal.

The image forming apparatus 100 is provided with an image forming unit 100A as an example of an image forming section that forms an image on paper which is an example of a recording medium.

For example, the formation of an image on paper by the image forming unit 100A is performed by an inkjet method or an electrophotographic method. In addition, the formation of an image on paper by the image forming unit 100A is not limited to the inkjet method or the electrophotographic method, but may be performed by other methods.

The image forming apparatus 100 is further provided with an information processing unit 100B. The information processing unit 100B executes various processes executed in the image forming apparatus 100.

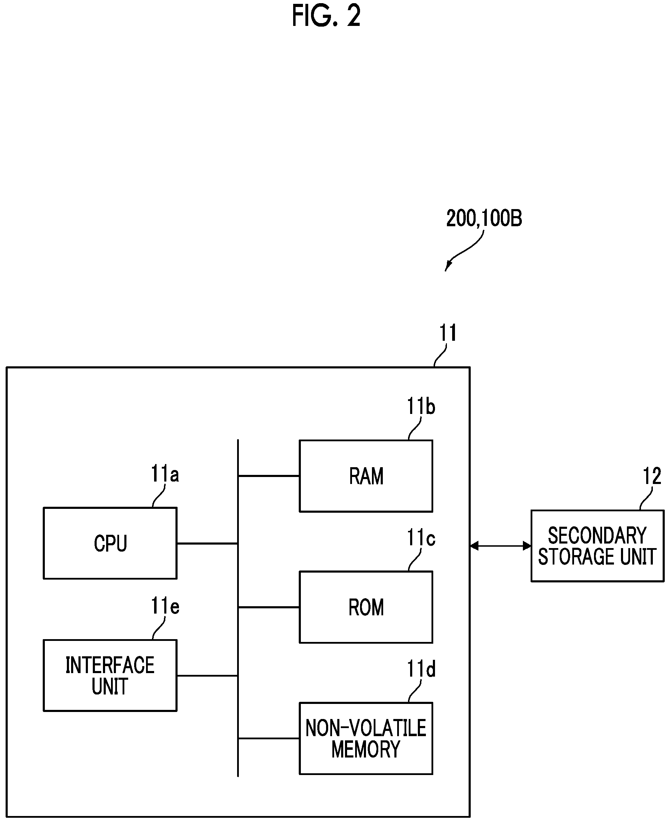

Fig. 2 is a diagram illustrating an example of a hardware configuration of the information processing unit 100B provided in the server apparatus 200 and the image forming apparatus 100. The information processing unit 100B provided in the server apparatus 200 and the image forming apparatus 100 is realized by a computer.

Each of the server apparatus 200 and the information processing unit 100B includes an arithmetic processing unit 11 that executes a digital arithmetic process according to a program, and a secondary storage unit 12 that stores information.

The secondary storage unit 12 is realized, for example, by a known information storage device such as a hard disk drive (HDD), a semiconductor memory, or a magnetic tape.

The arithmetic processing unit 11 is provided with a CPU 11a as an example of a processor.

In addition, the arithmetic processing unit 11 is provided with a RAM 11b used as a working memory or the like of the CPU 11a and a ROM 11c in which programs or the like executed by the CPU 11a are stored.

In addition, the arithmetic processing unit 11 is provided with a non-volatile memory 11d that is configured to be rewritable and can hold data even in a case in which power supply is interrupted and an interface unit 11e that controls each unit, such as a communication unit, connected to the arithmetic processing unit 11.

The non-volatile memory 11d is configured by, for example, an SRAM or a flash memory that is backed up by a battery. The secondary storage unit 12 stores the programs executed by the arithmetic processing unit 11 in addition to files and the like.

In the present exemplary embodiment, the arithmetic processing unit 11 reads the program stored in the ROM 11c or the secondary storage unit 12 to perform each process.

The program executed by the CPU 11a can be provided to the server apparatus 200 and the information processing unit 100B in a state in which the program is stored in a computer-readable recording medium such as a magnetic recording medium (for example, a magnetic tape or a magnetic disk), an optical recording medium (for example, an optical disk), a magnetooptical recording medium, or a semiconductor memory. Further, the program executed by the CPU 11a may be provided to the server apparatus 200 and the information processing unit 100B by a communication unit such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The process executed by the image forming apparatus 100 among the processes described below is executed by the CPU 11a as an example of the processor provided in the image forming apparatus 100.

The process executed by the server apparatus 200 among the processes described below is executed by the CPU 11a as an example of the processor provided in the server apparatus 200.

Further, the process for diagnosing the image forming apparatus 100 among the processes described below is executed by the server apparatus 200 as an example of the information processing system. The information processing system that executes the process for diagnosing the image forming apparatus 100 may be realized by one apparatus such as one server apparatus 200, or may be realized by a plurality of apparatus.

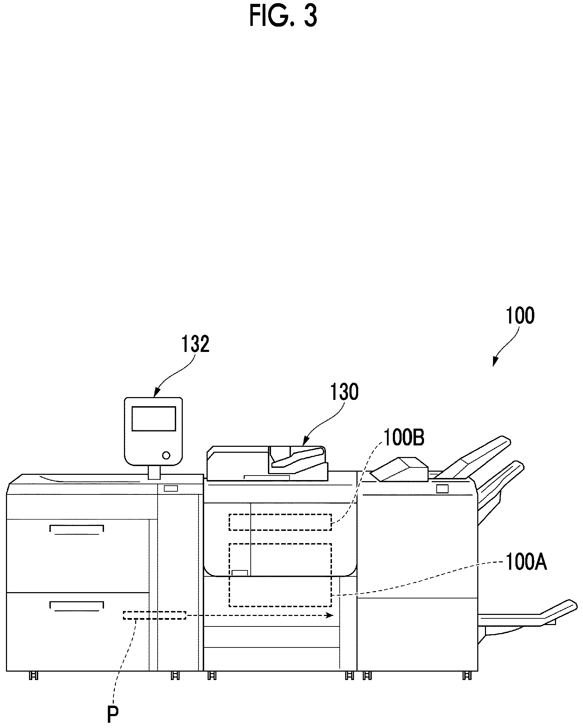

Fig. 3 is a diagram illustrating the image forming apparatus 100.

In the present exemplary embodiment, as described above, the image forming apparatus 100 is provided with the image forming unit 100A that forms an image on paper P which is an example of a recording medium.

In the present exemplary embodiment, in a case where the paper P passes through the image forming unit 100A, the paper P passes through the image forming unit 100A in a state where one side of the paper P faces the image forming unit 100A.

Further, the image forming apparatus 100 is provided with an image reading device 130 as an example of an image reading section that reads an image formed on a recording medium such as paper P.

Such an image reading device 130 is a so-called scanner having a function of transporting the paper. The image reading device 130 includes a light source that emits light to paper and a light receiving unit such as a CCD, that receives reflected light from the paper. In the present exemplary embodiment, read image data described later is generated based on the reflected light received by the light receiving unit.

A reading position of an image is set in advance in the image reading device 130, and the image reading device 130 reads an image at a portion of paper that is sequentially transported, which is located at the reading position.

The image forming apparatus 100 has an information transmission function of transmitting information to the server apparatus 200 (see Fig. 1).

In the example illustrated in Fig. 3, the image reading device 130 is provided above the image forming apparatus 100. The image reading device 130 sequentially reads paper (not illustrated) set by the user. The paper is not limited to paper on which an image is formed by the image forming apparatus 100, and may be paper on which an image is formed by another image forming apparatus 100.

An installation form of the image reading device 130 is not limited to the form illustrated in Fig. 3. The image reading device 130 may be provided inside the image forming apparatus 100 and on a transport path of paper P.

In this case, the paper P on which an image is formed by the image forming unit 100A sequentially passes through the image reading device 130, and at the time of passing through the paper P, each image of the paper P is read in order.

In the present exemplary embodiment, the image reading device 130 is provided with a paper reversing mechanism so that the paper can be supplied after the front and back sides have been reversed with respect to the reading position of the image.

Thus, in the present exemplary embodiment, the paper on which an image formed on one side is read can be reversed and supplied to the reading position again. As a result, images on the front and back sides of the paper can be read.

In addition, in reading an image on paper, the paper is placed on a platen (not illustrated) configured by plate-shaped glass or the like so that the paper placed on the platen may be read.

Further, each image forming apparatus 100 is provided with an operation reception unit 132 that receives an operation from the user. The operation reception unit 132 is configured by a so-called touch panel. The operation reception unit 132 displays information for the user and receives an operation performed by the user.

The display of information for the user and the reception of the operation by the user are not limited to being performed by one operation reception unit 132 as in the present exemplary embodiment. The operation reception unit and the information display unit may be provided separately.

In the present exemplary embodiment, in a case in which the image forming apparatus 100 (see Fig. 1) is diagnosed, first, the image forming unit 100A is operated to form a chart image 61 on paper that is an example of a recording medium. Thus, as indicated by the reference sign 1A in Fig. 1, chart paper CP which is the paper on which a chart image that is an example of a diagnosis image has been formed is generated.

A chart image 61 is an image used to diagnose the image forming apparatus 100. In the present exemplary embodiment, the chart paper CP which is the paper on which the chart image 61 used for the diagnosis has been formed is generated.

In a case where the chart paper CP is generated, the chart paper CP is installed on the image reading device 130 as indicated by the reference sign 1B in Fig. 1. The image reading device 130 is used to read the chart paper CP on which the chart image 61 is formed.

As a result, read image data obtained by reading the chart paper CP is generated.

In the present exemplary embodiment, the read image data is transmitted to the server apparatus 200 and then is stored in the server apparatus 200. The server apparatus 200 diagnoses the image forming apparatus 100 based on the read image data.

In the present exemplary embodiment, a user who uses the diagnosis system 1 in the present exemplary embodiment, such as a maintainer who maintains the image forming apparatus 100, accesses the server apparatus 200 and refers to the result of the diagnosis by the server apparatus 200.

In each image forming apparatus 100, as described above, the chart paper CP is generated and the chart paper CP is read, and thus the read image data is generated.

Such read image data is transmitted to the server apparatus 200. As described above, in the present exemplary embodiment, the server apparatus 200 diagnoses the image forming apparatus 100.

A process executed by the server apparatus 200 will be described.

In the present exemplary embodiment, the CPU 11a (see Fig. 2) as an example of the processor provided in the server apparatus 200 diagnoses the image forming apparatus 100 based on the above-described read image data transmitted from the image forming apparatus 100, and then acquires the diagnosis result which is the result of this diagnosis.

More specifically, the CPU 11a acquires an item diagnosis result being a diagnosis result that is a result of diagnosing the chart image 61 that is an image formed on the chart paper CP and is a diagnosis result for each of a plurality of diagnostic items.

Further, the CPU 11a acquires a comprehensive diagnosis result that is a comprehensive result of the diagnosis based on the item diagnosis result.

In the present exemplary embodiment, a plurality of diagnostic items are predetermined, and the CPU 11a in the server apparatus 200 analyzes the chart image 61 included in the read image data, and acquires the item diagnosis result for each of the plurality of diagnostic items.

More specifically, for example, the CPU 11a in the server apparatus 200 acquires the item diagnosis result for each of the plurality of the diagnostic items based on a difference between the reference value predetermined for each of the plurality of diagnostic items and the value obtained by analyzing the chart image 61.

The CPU 11a of the server apparatus 200 acquires the item diagnosis result of a worse evaluation as a difference between the reference value and the value obtained by analyzing the chart image 61 is larger.

In other words, the CPU 11a of the server apparatus 200 acquires the item diagnosis result of a lower evaluation as the difference between the reference value and the value obtained by analyzing the chart image 61 is larger.

Further, the CPU 11a acquires a comprehensive diagnosis result being a result of a comprehensive diagnosis of the image forming apparatus 100, by using a predetermined calculation expression based on the plurality of item diagnosis results.

As described above, the CPU 11a of the server apparatus 200 acquires the diagnosis result for the chart image 61 that is an image formed on paper P that is a recording medium by the image forming apparatus 100.

Specifically, the CPU 11a of the server apparatus 200 acquires a plurality of item diagnosis results and a comprehensive diagnosis result as the diagnosis results.

Further, the CPU 11a of the server apparatus 200 acquires treatment information being information regarding a treatment performed on the image forming apparatus 100.

Regarding the image forming apparatus 100, the image forming apparatus 100 may be adjusted, repaired, moved, and the like. Various treatments are performed on the image forming apparatus 100.

In the present exemplary embodiment, the CPU 11a of the server apparatus 200 also acquires treatment information being information regarding such a treatment performed on the image forming apparatus 100.

Specifically, in the present exemplary embodiment, a person who performs a treatment on the image forming apparatus 100 transmits, to the server apparatus 200, information regarding a treatment performed on the image forming apparatus 100 through a terminal device (not illustrated) such as a smartphone, a tablet terminal, a personal computer (PC), which is owned by the person.

Here, examples of the "person who performs a treatment on the image forming apparatus 100" include a user of the image forming apparatus 100, a service engineer who maintains the image forming apparatus 100, and the like.

As a result, the CPU 11a of the server apparatus 200 acquires the treatment information.

In addition, the image forming apparatus 100 itself may transmit, to the server apparatus 200, the treatment information being information regarding the treatment performed on the image forming apparatus 100, and the server apparatus 200 may acquire the treatment information accordingly.

Here, examples of the treatment information transmitted to the server apparatus 200 include information indicating the type of treatment such as adjustment, repair, and movement.

In a case where the treatment performed on the image forming apparatus 100 is adjustment or repair, for example, information regarding the contents of the adjustment or the repair is preferably transmitted to the server apparatus 200.

As the information regarding the contents of the repair, information as to whether or not the repair involves replacement of the parts and information regarding the replacement part may also be transmitted to the server apparatus 200.

As the treatment information, information for specifying a person who performs the treatment, such as a name or an identification number of the person who performs the treatment, may be transmitted to the server apparatus 200.

Further, as the treatment information, information indicating the type of the person who performs the treatment, such as information indicating whether the person who performs the treatment is a user or a service engineer, may be transmitted to the server apparatus 200.

As described above, in a case where the treatment information is transmitted to the server apparatus 200, the server apparatus 200 can execute a search process for the treatment information, and the server apparatus 200 can specify the treatment information satisfying a specific condition.

In a case where the treatment information satisfying the specific condition can be specified, information regarding the treatment satisfying the specific condition among the plurality of treatments performed in the past can be displayed on the user terminal 300.

Specifically, for example, information regarding the treatment of "movement" among the plurality of treatments performed in the past can be displayed on the user terminal 300. Further, for example, information on the treatment of "repair" among the plurality of treatments performed in the past can be displayed on the user terminal 300.

Further, for example, information regarding the treatment of "repair performed by a service engineer" among the plurality of treatments performed in the past can be displayed on the user terminal 300. Further, for example, information regarding the treatment of "adjustment performed by a user" among the plurality of treatments performed in the past can be displayed on the user terminal 300.

In a case where the CPU 11a of the server apparatus 200 acquires the diagnosis result and the treatment information, the CPU 11a stores the acquired information in the secondary storage unit 12 (see Fig. 2). Further, the CPU 11a of the server apparatus 200 generates a screen (described later) on which the diagnosis result and the treatment information are displayed.

Information regarding the generated screen is transmitted from the server apparatus 200 to the user terminal 300 (see Fig. 1), and a common screen on which the diagnosis result and the treatment information are displayed is displayed on the display device 310 (see Fig. 1) of the user terminal 300.

Thus, the user grasps the diagnosis result of the image forming apparatus 100 and the treatment information being information regarding the treatment performed on the image forming apparatus 100.

In the present exemplary embodiment, a case where the information regarding the screen generated by the CPU 11a is transmitted from the server apparatus 200 to the user terminal 300 and this screen is displayed on the user terminal 300 will be described. The information regarding the screen is not limited to this.

The information regarding the screen may be set to be output to an apparatus having a printing function such as the image forming apparatus 100 (see Fig. 1), and the screen may be set to be printed on a recording medium such as paper.

The "screen" is not limited to being displayed on the display device 310, and includes a screen printed on a recording medium such as paper.

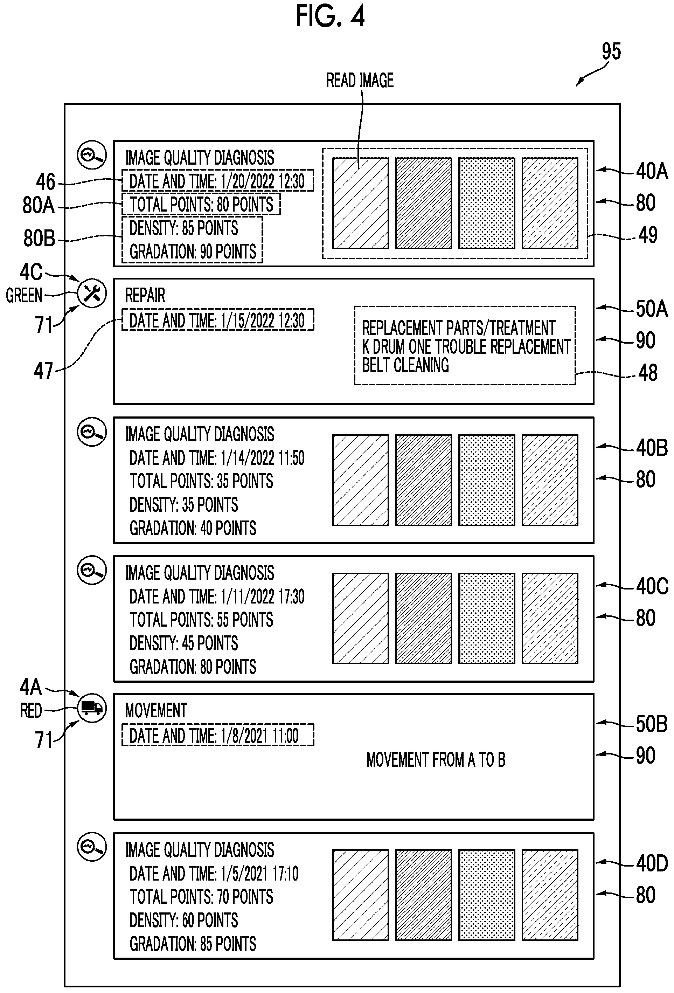

Fig. 4 is a diagram illustrating an example of a screen 95 generated by the CPU 11a.

As illustrated in Fig. 4, the CPU 11a of the server apparatus 200 generates the screen 95 on which a diagnosis result 80 and treatment information 90 are displayed to be arranged in chronological order.

In this example, the diagnosis result 80 for each of diagnoses performed four times and the treatment information 90 for each of treatments performed two times are displayed. In other words, in this example, the four diagnosis results 80 indicated by the reference signs 40A, 40B, 40C, and 40D and the two pieces of treatment information 90 indicated by the reference signs 50A and 50B are displayed.

In each of the diagnosis results 80, a comprehensive diagnosis result 80A and an item diagnosis result 80B are displayed.

Each of the comprehensive diagnosis result 80A and the item diagnosis result 80B is displayed with a numerical value. In the present exemplary embodiment, the larger the numerical value, the better the diagnosis result.

In this example illustrated in Fig. 4, as the item diagnosis result 80B, a diagnosis result for the diagnostic item "density" and a diagnosis result for the diagnostic item "gradation" are displayed. Further, in this example, the item diagnosis result 80B is displayed in a list format.

In the present exemplary embodiment, the item diagnosis result 80B displayed on each of the diagnosis results 80 can be changed based on an instruction from the user performing an operation on the user terminal 300 (see Fig. 1).

In the example illustrated in Fig. 4, the diagnosis results for the diagnostic item "density" and the diagnostic item "gradation" are displayed as the item diagnosis result 80B. In the present exemplary embodiment, a diagnosis results for the diagnostic item other than the diagnostic item "density" and the diagnostic item "gradation" can also be displayed.

In a case where the diagnosis result for the other diagnostic item is displayed, the CPU 11a of the server apparatus 200 switches the diagnostic item to be displayed based on an instruction from the user. The CPU 11a generates a new screen 95 (not illustrated) on which the diagnostic item after the switching and the diagnosis result for this diagnostic item are displayed.

The description of the screen 95 illustrated in Fig. 4 will be continued.

On the screen 95 illustrated in Fig. 4, a symbol 71 indicating the type of treatment is displayed at each display location of the treatment information 90.

Specifically, in this example, two pieces of treatment information 90 are displayed, and the symbol 71 indicating the type of treatment is displayed in each of the display locations of the two pieces of treatment information 90.

More specifically, in this example, "movement" of the image forming apparatus 100 is performed as one of the treatments. On the screen 95 illustrated in Fig. 4, as indicated by the reference sign 4A, as the symbol 71 indicating the type of treatment, the symbol 71 indicating that the type of treatment is "movement" is displayed at the display location of the treatment information 90 indicated by the reference sign 50B.

In this example, "repair" of the image forming apparatus 100 is performed as one of the treatments. On the screen 95 illustrated in Fig. 4, as indicated by the reference sign 4C, as the symbol 71 indicating the type of treatment, the symbol 71 indicating that the type of treatment is "repair" is displayed at the display location of the treatment information 90 indicated by the reference sign 50A.

Each symbol 71 is different for each type of treatment, and the user can more easily specify the treatment performed on the image forming apparatus 100 by referring to the symbol 71.

The symbol 71 is configured to include at least an illustration. The symbol 71 may include an illustration, may include text, and may be configured by a combination of the illustration and the text.

Further, on the screen 95 illustrated in Fig. 4, information regarding the date and time when the diagnosis as a base of the diagnosis result 80 is performed is displayed in each display location of the diagnosis result 80, as indicated by the reference sign 46. In other words, on the screen 95 illustrated in Fig. 4, information for specifying the time when the diagnosis as the base of the diagnosis result 80 is performed is displayed in each display location of the diagnosis result 80.

Further, on the screen 95 illustrated in Fig. 4, information regarding the date and time when the treatment is performed is displayed in each display location of the treatment information 90, as indicated by the reference sign 47. In other words, on the screen 95 illustrated in Fig. 4, information for specifying the time when the treatment is performed is displayed in each display location of the treatment information 90.

The CPU 11a of the server apparatus 200 rearranges the diagnosis result 80 and the treatment information 90 based on the information regarding the date and time, and generates the screen 95 illustrated in Fig. 4 in which the diagnosis result 80 and the treatment information 90 are arranged in chronological order.

On the screen 95 illustrated in Fig. 4, a display target having the date and time that is closer to the latest time is displayed at the upper portion of the screen 95. The present disclosure is not limited to this, and the display target having the date and time that is closer to the latest time may be displayed at the lower portion of the screen 95.

In a case where the diagnosis result 80 and the treatment information 90 are displayed on the common screen 95 and are arranged in chronological order as on the screen 95 illustrated in Fig. 4, the user can more easily specify the treatment that causes the change in the quality of an image formed by the image forming apparatus 100, as compared with a case where the diagnosis result 80 and the treatment information 90 are displayed on separate screens 95.

Further, in a case where the diagnosis result 80 and the treatment information 90 are displayed on the common screen 95 and are arranged in chronological order as on the screen 95 illustrated in Fig. 4, the user can more easily grasp an influence on an image formed by the image forming apparatus 100, which is an influence of the treatment performed on the image forming apparatus 100, as compared with a case where the diagnosis result 80 and the treatment information 90 are displayed on separate screens 95.

Here, among the treatments, the treatments of "adjustment" and "repair" can be referred to as treatments for improving the quality of an image formed by the image forming apparatus 100. In other words, "adjustment" and "repair" can be referred to as the treatments having a positive influence on the image forming apparatus 100.

On the other hand, the treatment of "movement" among the treatments can be referred to as a treatment of deteriorating the quality of the image formed by the image forming apparatus 100. In other words, the treatment of "movement" can be referred to as a treatment having a negative influence on the image forming apparatus 100.

On the screen 95 illustrated in Fig. 4, information indicating whether the treatment performed on the image forming apparatus 100 is a treatment having a positive influence on the image forming apparatus 100 or a treatment having a negative influence on the image forming apparatus 100 is displayed.

Specifically, on the screen 95, the symbol 71 of a green color, which is indicated by the reference sign 4C in Fig. 4, is displayed as information indicating the treatment having a positive influence on the image forming apparatus 100. As described above, the symbol 71 is a symbol indicating the type of treatment. In the present exemplary embodiment, the color of the symbol 71 is green. More specifically, the symbol 71 indicated by the reference sign 4C in Fig. 4 is a symbol corresponding to the treatment of "repair", and, in the present exemplary embodiment, the color of the symbol 71 is green.

In the present exemplary embodiment, regarding the treatment having a positive influence on the image forming apparatus 100, by displaying the symbol 71 corresponding to this treatment in green, a form in which information indicating the treatment that has a positive influence on the image forming apparatus 100 is displayed is provided.

Further, on the screen 95 illustrated in Fig. 4, the symbol 71 of a red color, which is indicated by the reference sign 4A in Fig. 4, is displayed as information indicating a treatment having a negative influence on the image forming apparatus 100. The symbol 71 is a symbol indicating the type of treatment. In the present exemplary embodiment, the color of the symbol 71 is red. More specifically, the symbol 71 indicated by the reference sign 4A in Fig. 4 is a symbol corresponding to the treatment of "movement", and, in the present exemplary embodiment, the color of the symbol 71 is red.

In the present exemplary embodiment, regarding the treatment having a negative influence on the image forming apparatus 100, by displaying the symbol 71 corresponding to this treatment in red, a form in which information indicating the treatment that has a negative influence on the image forming apparatus 100 is displayed is provided.

In this example, the information indicating the treatment that has a positive or negative influence on the image forming apparatus 100 is expressed by the color, but may also be expressed by text information, a symbol, or the like.

The screen 95 illustrated in Fig. 4 illustrates a case where the treatment specified by the treatment information 90 indicated by the reference sign 50A is the treatment of "repair". In the treatment information 90 indicated by the reference sign 50A, the contents of the repair are displayed as indicated by the reference sign 48.

In the present exemplary embodiment, in a case where the treatment performed on the image forming apparatus 100 is "repair", the contents of the repair are displayed as indicated by the reference sign 48.

Specifically, in the example illustrated in Fig. 4, the contents of the work performed by a worker and information regarding a replacement part are displayed as the contents of the repair.

In the present exemplary embodiment, in a case where the treatment on the image forming apparatus 100 is performed as described above, the treatment information 90 that is information regarding the treatment performed on the image forming apparatus 100 is transmitted to the server apparatus 200.

In the present exemplary embodiment, in a case where "repair" is performed as the treatment, information regarding the contents of the repair is transmitted to the server apparatus 200 as the treatment information 90, for example.

As the information regarding the contents of the repair, for example, the contents of the work performed by the worker and the information regarding the replacement part are transmitted. In the present exemplary embodiment, these pieces of information are displayed on the screen 95 illustrated in Fig. 4.

Further, on the screen 95 illustrated in Fig. 4, as indicated by the reference sign 49, a read image as a base of the diagnosis result 80 is displayed at each display location of the diagnosis result 80.

In the present exemplary embodiment, as described above, diagnosis is performed based on read image obtained by reading the chart image 61 (see Fig. 1), and thus the diagnosis result 80 is acquired.

On the screen 95 illustrated in Fig. 4, the diagnosis result 80 is displayed, and a portion of the read image as the base of the diagnosis result 80 is displayed at each display location of the diagnosis result 80.

In a case where the CPU 11a of the server apparatus 200 generates the screen 95 illustrated in Fig. 4, a portion of the read image as the base of the diagnosis result 80 is disposed at each display location of the diagnosis result 80.

In the present exemplary embodiment, the read image is associated with the diagnosis result 80 for each diagnosis result 80.

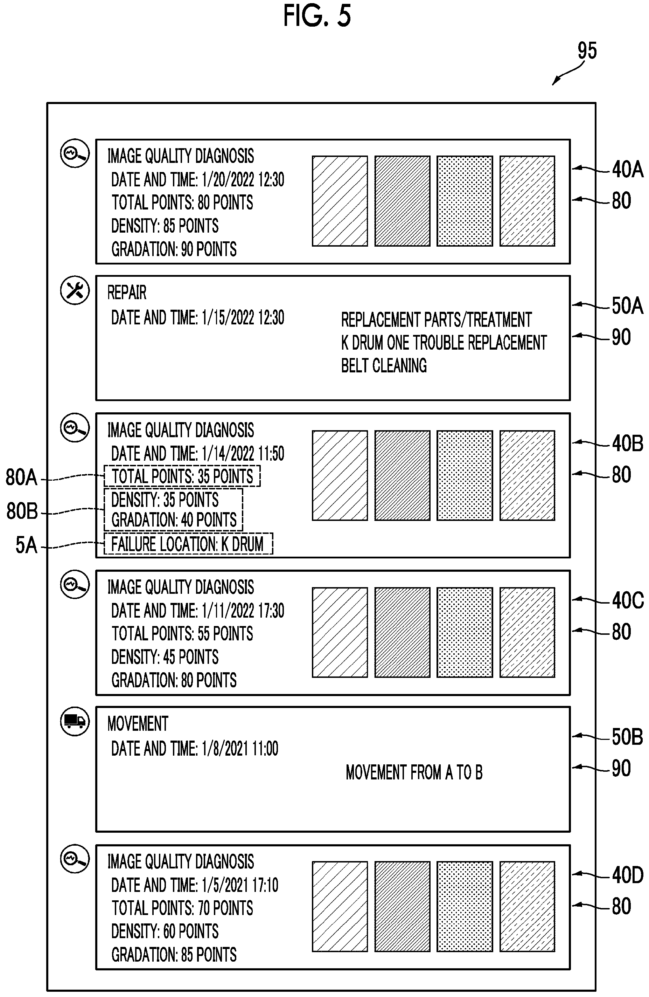

Fig. 5 is a diagram illustrating another example of the screen 95 generated by the CPU 11a of the server apparatus 200.

In this screen 95 illustrated in Fig. 5, information indicating a failure location of the image forming apparatus 100 is displayed at the display location of the diagnosis result 80 indicated by the reference sign 40B, as indicated by the reference sign 5A.

Specifically, in the diagnosis result 80 indicated by the reference sign 40B, the comprehensive diagnosis result 80A is smaller than a predetermined threshold value and the evaluation is low. In this example, information indicating the failure location of the image forming apparatus 100 is displayed at the display location at which the diagnosis result 80 having a low evaluation is displayed.

In a case where the comprehensive diagnosis result 80A is smaller than the predetermined threshold value, the CPU 11a of the server apparatus 200 causes information indicating the failure location of the image forming apparatus 100 to be provided at the display location of the diagnosis result 80 at which the comprehensive diagnosis result 80A is displayed on the generated screen 95.

In specifying the failure location of the image forming apparatus 100, the CPU 11a of the server apparatus 200 specifies the failure location of the image forming apparatus 100, for example, based on the item diagnosis result 80B which is the basis of the comprehensive diagnosis result 80A.

In generating the screen 95 illustrated in Fig. 5, the CPU 11a of the server apparatus 200 causes the information regarding the failure location to be provided on the screen 95.

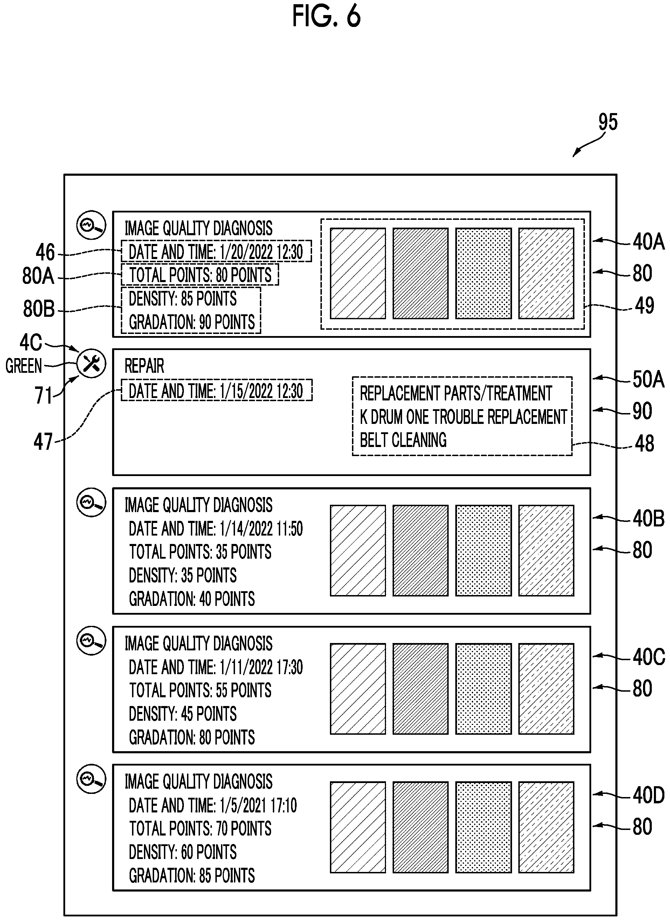

Fig. 6 is a diagram illustrating still another example of the screen 95 generated by the CPU 11a of the server apparatus 200.

This screen 95 is a screen 95 on which the treatment information 90 for a specific type of treatment among a plurality of types of treatments allowed to be performed on the image forming apparatus 100 and the diagnosis result 80 are displayed.

Specifically, this screen 95 is a screen 95 on which the treatment information 90 regarding "repair" and the diagnosis result 80 are displayed.

In the present exemplary embodiment, by performing an operation on the user terminal 300 (see Fig. 1), the user can designate the type of treatment desired to be displayed among a plurality of types of treatments.

In a case where the type of treatment is designated, the CPU 11a of the server apparatus 200 generates a screen 95 on which the treatment information 90 for the type of treatment designated by the user among the plurality of types of treatments and the diagnosis result 80 are displayed.

In the example illustrated in Fig. 6, the type of treatment designated by the user is "repair". In this case, the CPU 11a of the server apparatus 200 generates the screen 95 on which the treatment information 90 for the treatment of "repair" and the diagnosis result 80 are displayed.

Here, for example, it is assumed that, in a state (illustrated in Fig. 4) where the screen 95 on which the diagnosis result 80 and the treatment information 90 are displayed is displayed on the user terminal 300 (see Fig. 1), a specific type of treatment is designated by the user.

In this case, the CPU 11a of the server apparatus 200 generates a new screen 95 on which the treatment information 90 regarding the treatment of a type other than the specific type is not provided, and the treatment information 90 regarding the specific type of treatment and the diagnosis result 80 are provided.

In other words, in this case, the CPU 11a of the server apparatus 200 generates the new screen 95 on which the treatment information 90 regarding the type of treatment designated by the user is displayed, and the treatment information 90 for the type of treatment not designated by the user is not displayed.

Thus, for example, the screen 95 illustrated in Fig. 6 is generated, and this screen 95 is displayed on the display device 310 provided in the user terminal 300 (see Fig. 1).

In the example illustrated in Fig. 6, as described above, a case where the type of treatment designated by the user is "repair" is illustrated.

In this case, on the screen 95 illustrated in Fig. 6, the treatment information 90 regarding the treatment such as "movement" which is the treatment other than "repair" is hidden, and the treatment information 90 regarding "repair" and the diagnosis result 80 are displayed.

In the present exemplary embodiment, in a case where the treatment is performed on the image forming apparatus 100, various types of information regarding the "treatment" are transmitted to the server apparatus 200 and stored in the server apparatus 200 as described above.

In the present exemplary embodiment, the search process for the information regarding the treatment can be performed based on the various types of information stored in the server apparatus 200, and the treatment satisfying a specific condition can be specified.

In the above description, the search process for the treatment is executed based on the information regarding the type of treatment designated by the user, and thus the treatment of "repair" is specified, but the search process may be executed based on other type of information that is not the type of treatment, and thus the treatment may be specified.

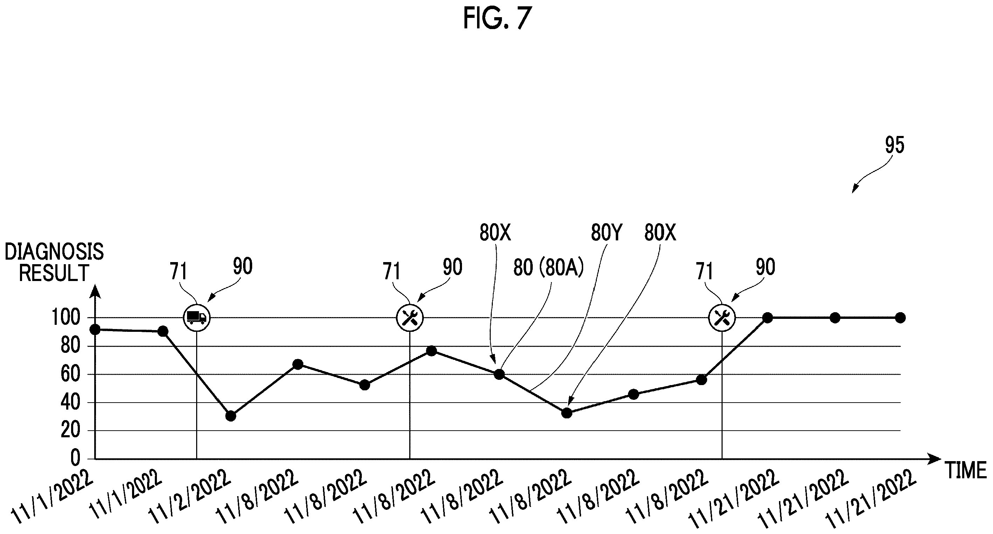

Fig. 7 is a diagram illustrating still yet another example of the screen 95 generated by the CPU 11a of the server apparatus 200.

The screen 95 illustrated in Fig. 7 is a screen 95 in which the diagnosis result 80 is represented by a graph.

More specifically, the screen 95 illustrated in Fig. 7 is a screen 95 in which the diagnosis result 80 is represented by a polygonal line graph. The diagnosis result 80 in Fig. 7 has a value equal to the value of the comprehensive diagnosis result 80A.

In this polygonal line graph, the horizontal axis indicates the time axis, and the vertical axis indicates the quality of the diagnosis result 80.

The graph representing the diagnosis result 80 is not limited to the polygonal line graph, and any other graph may be used as long as the diagnosis result 80 can be displayed in chronological order.

Examples of other graphs include a bar graph.

Examples of the other graphs include a graph in which only a point 80X representing the numerical value of the diagnosis result 80 is displayed, and the illustration of a line 80Y connecting the point 80X and the point 80X is omitted in the graph illustrated in Fig. 7.

The graph may be in any form as long as one of the horizontal axis and the vertical axis indicating the time axis exists and the other axis indicating the quality of the diagnosis result 80 exists.

The treatment information 90 is also displayed on the screen 95 illustrated in Fig. 7.

The diagnosis result 80 and the treatment information 90 are displayed on the graph, on the screen 95 illustrated in Fig. 7. Further, the diagnosis result 80 and the treatment information 90 represented on the graph are arranged in chronological order on the screen 95 illustrated in Fig. 7.

The diagnosis result 80 is displayed at a location of the graph corresponding to the date and time when the diagnosis is performed. The treatment information 90 is displayed at a location of the graph corresponding to the date and time when the treatment is performed.

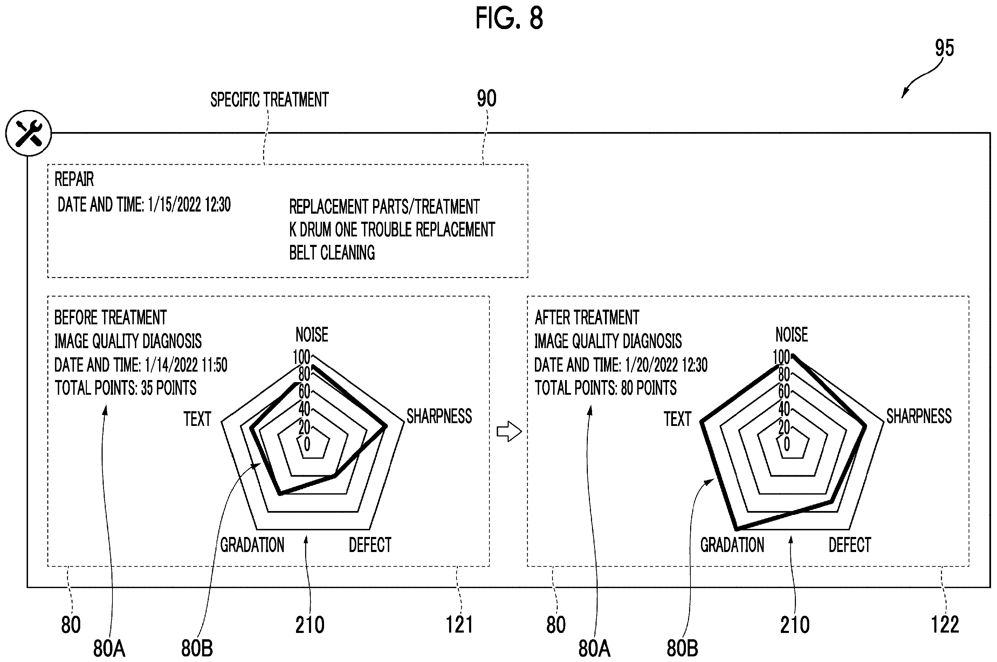

Fig. 8 is a diagram illustrating still yet another example of the screen 95 generated by the CPU 11a of the server apparatus 200.

The screen 95 illustrated in Fig. 8 is a screen 95 including the treatment information 90, the diagnosis result 80 for a diagnosis performed before the treatment specified by the treatment information 90 (referred to as a "specific treatment" below), and the diagnosis result 80 for a diagnosis performed after the specific treatment.

Here, the diagnosis result 80 for the diagnosis performed before the specific treatment is indicated by the reference sign 121, and the diagnosis result 80 for the diagnosis performed after the specific treatment is indicated by the reference sign 122.

"Before the specific treatment" means time before the specific treatment, and "after the specific treatment" means time after the specific treatment.

More specifically, this screen 95 is a screen 95 including the diagnosis result 80 for a diagnosis performed at the closest time to the time when the specific treatment is performed among diagnoses performed before the specific treatment, and the diagnosis result 80 for a diagnosis performed at the closest time to the time when the specific treatment is performed among diagnoses performed after the specific treatment.

In other words, the screen 95 is a screen 95 including the diagnosis result 80 for a diagnosis performed immediately before the specific treatment and the diagnosis result 80 for a diagnosis performed immediately after the specific treatment.

As illustrated in Fig. 8, regarding the diagnosis result 80, the results may be narrowed into results of two diagnoses that are the result of the diagnosis performed immediately before the specific treatment as a display target and the result of the diagnosis performed immediately after the specific treatment as the display target and then be displayed.

In the example illustrated in Fig. 8, the value of the diagnosis result 80 changes beyond a predetermined threshold value before and after the treatment is performed.

Specifically, in the example illustrated in Fig. 8, the comprehensive diagnosis result 80A is improved from "35 points" to "80 points" under the influence of the treatment of "repair", and the value of the diagnosis result 80 changes beyond a predetermined threshold value before and after the treatment is performed.

In this example illustrated in Fig. 8, 45 points, which is a value obtained by subtracting the score "35 points" of the comprehensive diagnosis result 80A that is an example of the result of a diagnosis performed immediately before the treatment, from "80 points" of the comprehensive diagnosis result 80A that is an example of the result of a diagnosis performed immediately after the treatment exceeds 30 points (not illustrated) that is an example of the predetermined threshold value.

In the present exemplary embodiment, the treatment can be searched for as described above.

In the present exemplary embodiment, in a case where a predetermined instruction is given from the user via the user terminal 300, for example, a threshold-exceeding treatment is searched among the treatments. The threshold-exceeding treatment is a treatment for which the value of the diagnosis result 80 changes beyond the predetermined threshold value before and after the treatment is performed. The search is performed by the CPU 11a of the server apparatus 200.

As a result of this search, in a case where the threshold-exceeding treatment is specified, the CPU 11a of the server apparatus 200 generates the screen 95 illustrated in Fig. 8, including the information regarding the specified threshold-exceeding treatment and the diagnosis result 80 for each of diagnoses performed before and after the threshold-exceeding treatment.

In the search for the threshold-exceeding treatment, for each treatment, a subtraction value is acquired. The subtraction value is obtained by subtracting the score of the diagnosis result 80 for the diagnosis performed immediately before this treatment, from the score of the diagnosis result 80 for the diagnosis performed immediately after the treatment.

Then, the threshold-exceeding treatment that is a treatment for which the subtraction value exceeds a predetermined threshold value is specified based on the subtraction value obtained for each treatment.

In a case where the threshold-exceeding treatment is specified, the CPU 11a generates the screen 95 illustrated in Fig. 8, including the information regarding the specified threshold-exceeding treatment and the diagnosis results 80 for each of the diagnoses performed before and after the threshold-exceeding treatment.

A radar chart 210 is displayed at each display location of the diagnosis result 80 on the screen 95 illustrated in Fig. 8. At each display location of the diagnosis result 80, the radar chart 210 for displaying the item diagnosis result 80B is displayed in addition to the comprehensive diagnosis result 80A.

The "radar chart 210" means a chart in which the relationship between the diagnostic item and the item diagnosis result 80B is displayed on a polygon. In the present exemplary embodiment, the diagnostic item is associated with each of the vertexes of the polygon, and the item diagnosis result 80B is displayed on a line connecting the vertex of the polygon and the center of the polygon.

In Fig. 8, the case where the item diagnosis result 80B is displayed on the radar chart 210 has been described. The present disclosure is not limited to this, and the item diagnosis result 80B may be displayed in a list format as in the display form illustrated in Fig. 4.

In the above description, as an example of the search, a case where the search for the threshold-exceeding treatment is performed has been described. The search target is not limited to the threshold-exceeding treatment.

Based on input information which is information input by the user via the user terminal 300, the treatment other than the threshold-exceeding treatment may be specified by executing the search process for the treatment.

The screen 95 on which the treatment obtained by the specifying and the diagnosis result 80 for the diagnosis performed before and after the specified treatment are displayed may be generated.

For example, in a case where the user inputs information for specifying the treatment of "movement" as the input information, the treatment of "movement" may be specified, and the screen 95 including the diagnosis result 80 for each of diagnoses performed before and after the treatment of "movement" may be generated.

In addition, for each of a plurality of existing treatments, the screen 95 including information regarding the treatment and the diagnosis result 80 for each of the diagnoses performed before and after the treatment may be generated. In this case, the screen 95 illustrated in Fig. 8 is generated for each treatment.

In this case, in a case where the user gives an instruction to switch the screen via the user terminal 300, the screen 95 generated for each treatment is sequentially displayed on the user terminal 300.

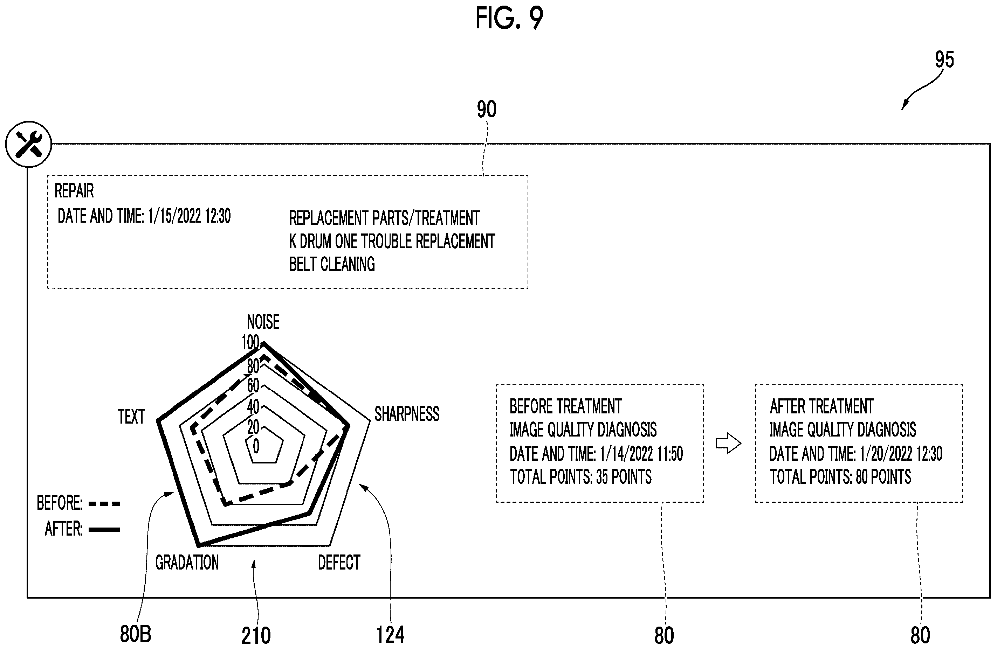

Fig. 9 is a diagram illustrating another display example.

In the display example illustrated in Fig. 8, the radar chart 210 is displayed for each diagnosis result 80, and a plurality of radar charts 210 are displayed at different locations.

On the other hand, in the example illustrated in Fig. 9, as indicated by the reference sign 124, the radar chart 210 for representing the diagnosis result 80 for the diagnosis performed immediately after the threshold-exceeding treatment and the radar chart 210 for representing the diagnosis result 80 for the diagnosis immediately before the threshold-exceeding treatment are displayed in a superimposed state.

In this case, as compared with the case where a plurality of radar charts 210 are arranged at different locations, it is easy to understand the change in the item diagnosis result 80B before and after the treatment is performed.

In the present exemplary embodiment, the user can input information regarding the change in the diagnosis result 80 as the input information via the user terminal 300.

In this case, the CPU 11a of the server apparatus 200 executes the search process for the treatment based on this information regarding the change in the diagnosis result 80, and specifies the treatment.

The CPU 11a generates a screen 95 on which the treatment information 90 of the specified treatment and the diagnosis result 80 for each of the diagnoses performed before and after the specified treatment are displayed.

Examples of the "information regarding the change in the diagnosis result 80" include information indicating that the diagnosis result 80 becomes deteriorated, information indicating that the diagnosis result 80 becomes improved, and information indicating that the diagnosis result 80 is not changed.

In a case where the user inputs information indicating that the diagnosis result 80 becomes deteriorated, the CPU 11a of the server apparatus 200 specifies the treatment for which the diagnosis result 80 becomes deteriorated before and after the treatment, and generates the screen 95 including the treatment information 90 of the specified treatment and the diagnosis result 80 for each of the diagnoses performed before and after the specified treatment.

More specifically, in a case where the user inputs information indicating that the diagnosis result 80 becomes deteriorated, the CPU 11a of the server apparatus 200 specifies the treatment for which the diagnosis result 80 becomes deteriorated before and after the treatment, and the difference in the diagnosis result 80 before and after exceeds the predetermined threshold value.

The CPU 11a generates a screen 95 including the treatment information 90 of the specified treatment and the diagnosis result 80 for each of the diagnoses performed before and after the specified treatment.

In addition, In a case where the user inputs information indicating that the diagnosis result 80 becomes improved, the CPU 11a of the server apparatus 200 specifies the treatment for which the diagnosis result 80 becomes improved before and after the treatment, and generates the screen 95 on which the treatment information 90 of the specified treatment and the diagnosis result 80 for each of the diagnoses performed before and after the specified treatment are displayed.

More specifically, in a case where the user inputs information indicating that the diagnosis result 80 becomes improved, the CPU 11a of the server apparatus 200 specifies the treatment for which the diagnosis result 80 becomes improved before and after the treatment, and the difference in the diagnosis result 80 before and after exceeds the predetermined threshold value.

The CPU 11a generates a screen 95 including the treatment information 90 of the specified treatment and the diagnosis result 80 for each of the diagnoses performed before and after the specified treatment.

In addition, In a case where the user inputs information indicating that the diagnosis result 80 is not changed, the CPU 11a of the server apparatus 200 specifies the treatment for which the diagnosis result 80 is not changed before and after the treatment, and generates the screen 95 on which the treatment information 90 of the specified treatment and the diagnosis result 80 for each of the diagnoses performed before and after the specified treatment are displayed.

More specifically, in a case where the user inputs information indicating that the diagnosis result 80 is not changed, the CPU 11a of the server apparatus 200 specifies the treatment for which the difference in the diagnosis result 80 before and after the treatment does not exceed the predetermined threshold value.

The CPU 11a generates a screen 95 including the treatment information 90 of the specified treatment and the diagnosis result 80 for each of the diagnoses performed before and after the specified treatment.

In addition, in the present exemplary embodiment, the CPU 11a of the server apparatus 200 can also execute the search process for the diagnosis result 80, and the CPU 11a of the server apparatus 200 can specify the diagnosis result 80 indicating the result of specifying.

Although the search process for the treatment has been described above, the target of the search process is not limited to the treatment. The CPU 11a of the server apparatus 200 can also search for the diagnosis result 80 based on the input information input by the user.

Specifically, for example, in a case where the user inputs the input information via the user terminal 300, the CPU 11a of the server apparatus 200 searches for the diagnosis result 80 stored in the secondary storage unit 12 based on this input information, and specifies the diagnosis result 80 ("similar diagnosis result 80" below) in which the similarity with the input information is larger than a predetermined threshold value.

The CPU 11a of the server apparatus 200 generates, for example, the screen 95 on which the specified similar diagnosis result 80, the treatment information 90, and the other diagnosis result 80 are displayed.

More specifically, the CPU 11a of the server apparatus 200 may generate the screen 95 on which, for example, the similar diagnosis result 80, the treatment information 90 of a post-treatment that is the treatment performed after the diagnosis as the base of the similar diagnosis result 80 (referred to as a "post-treatment information 90" below), and the diagnosis result 80 for the diagnosis performed after this post-treatment ("after-treatment diagnosis" below) ("after-treatment diagnosis result 80" below) are displayed.

The CPU 11a of the server apparatus 200 reads and acquires the post-treatment information 90 and the after-treatment diagnosis result 80 from the secondary storage unit 12. Then, as described above, the CPU 11a generates the screen 95 on which the similar diagnosis result 80, the post-treatment information 90, and the after-treatment diagnosis result 80 are displayed.

In this example, the generated screen 95 is output to the user terminal 300 and displayed on the user terminal 300.

As described above, in a case where the screen 95 on which the similar diagnosis result 80, the post-treatment information 90, and the after-treatment diagnosis result 80 are displayed is generated, and this screen 95 is displayed on the user terminal 300, the user can easily find the treatment to be performed on the image forming apparatus 100.

Here, it is assumed that the diagnosis result 80 for the diagnosis of the image forming apparatus 100 is poor, and it is necessary to perform the treatment on the image forming apparatus 100 from now on.

In this case, the user inputs diagnosis result information being information regarding the diagnosis result 80, as the input information via the user terminal 300.

In response to this, the CPU 11a executes the search process to specify the above-described similar diagnosis result 80 having information in which the similarity with the diagnosis result information exceeds the predetermined threshold value.

Further, in this case, the CPU 11a reads and acquired, from the secondary storage unit 12, the post-treatment information 90 that is information regarding the post-treatment performed after the diagnosis as the base of the similar diagnosis result 80, and the after-treatment diagnosis result 80 that is a diagnosis result 80 for the after-treatment diagnosis performed after the post-treatment.

Then, the CPU 11a generates the screen 95 on which the similar diagnosis result 80, the post-treatment information 90, and the after-treatment diagnosis result 80 are displayed. This screen 95 is displayed on the user terminal 300.

In this case, the user can easily find the treatment to be performed on the image forming apparatus 100 by referring to this screen 95.

Specifically, in this case, in a case where the after-treatment diagnosis result 80 displayed on this screen 95 displayed on the user terminal 300 indicates the good evaluation, the user recognizes that the post-treatment performed before after-treatment diagnosis is a treatment having a positive influence on the image forming apparatus 100.

In this case, the user finds the same treatment as the post-treatment, as the treatment performed on the image forming apparatus 100 from now on.

According to the information processing system according to appended claim 1, it is possible to make it easy to grasp a relationship between a treatment performed on an image forming apparatus and quality of an image formed by the image forming apparatus as compared with a case of generating a screen including only a diagnosis result of an image formed by the image forming apparatus.

According to the information processing system according to appended claim 2, it is possible to make it easy to grasp a relationship between a treatment performed on an image forming apparatus and quality of an image formed by the image forming apparatus as compared with a case where a diagnosis result and treatment information are not arranged in chronological order.

According to the information processing system according to appended claim 3, it is possible to make it easy to perform comparison of a diagnosis result as compared with a case where the diagnosis result is not displayed with a numerical value.

According to the information processing system according to appended claim 4, it is possible to make it easy to grasp a change in a diagnosis result as compared with a case where the diagnosis result is displayed in a list format.

According to the information processing system according to appended claim 5, it is possible to make it easy to grasp a relationship between treatment information and a diagnosis result, as compared with a case where the treatment information is displayed at a position separated from a graph.

According to the information processing system according to appended claim 6, it is possible to make it easy to grasp the type of treatment performed, as compared with a case where treatment information is displayed only by text.

According to the information processing system according to appended claim 7, it is possible to generate a screen on which it is easy to grasp treatment information, as compared with a case where treatment information for a treatment that has not been specified by a user is also displayed on the screen.

According to the information processing system according to appended claim 8, it is easy for the user who refers to a screen to grasp the date and time when diagnosis as a base of obtaining a diagnosis result is performed and the date and time when a treatment is performed.

According to the information processing system according to appended claim 9, it is possible to make it easy to grasp an influence of a treatment performed on an image forming apparatus, on the image forming apparatus, as compared with a case where a screen does not include information for a treatment having a positive influence and a treatment having a negative influence.

According to the information processing system according to appended claim 10, in notifying a user of treatment information, it is possible to notify the user of a diagnosis result of a diagnosis performed before a specific treatment that is a treatment specified by the treatment information, and a diagnosis result of a diagnosis performed after the specific treatment.

According to the information processing system according to appended claim 11, in notifying a user of treatment information, it is possible to notify the user of a diagnosis result of a diagnosis that is performed before a specific treatment that is a treatment specified by the treatment information and is performed at the closest time to time when the specific treatment is performed, and a diagnosis result of a diagnosis that is performed after a specific treatment and is performed at the closest time to time when the specific treatment is performed.

According to the information processing system according to appended claim 12, it is possible to notify a user of treatment information regarding a specific type of treatment among a plurality of types of treatments allowed to be performed on an image forming apparatus, and a diagnosis result.

According to the information processing system according to appended claim 1, it is possible to generate a screen including treatment information for a treatment of a type desired to be displayed by a user.

According to the information processing system according to appended claim 14, it is possible to generate a screen including information regarding repair performed on an image forming apparatus.

According to the program according to appended claim 15, it is possible to make it easy to grasp a relationship between a treatment performed on an image forming apparatus and quality of an image formed by the image forming apparatus as compared with a case of generating a screen including only a diagnosis result of an image formed by the image forming apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

1: diagnosis system
11a: CPU
61: chart image
71: symbol
80: diagnosis result
90: treatment information
95: screen
100: image forming apparatus
200: server apparatus
300: user terminal

## Claims

1. An information processing system (200) **characterized in** comprising:
a processor (11a), configured to:
analyze a chart image included in a read image data and acquire a diagnosis result (80) for each of a plurality of predetermined diagnostic items being a result of diagnosing the chart image formed on a recording medium (P) by an image forming apparatus (100);
acquire treatment information (90) being information regarding type of a treatment performed in the past on the image forming apparatus (100); and
generate a screen (95) on which the diagnosis result (80) and the treatment information (90) are displayed.

2. The information processing system (200) according to claim 1, wherein the processor (11a) is configured to:
generate the screen (95) on which the diagnosis result (80) and the treatment information (90) are displayed to be arranged in chronological order, in generating the screen (95).

3. The information processing system (200) according to claim 1 or 2, wherein the processor (11a) is configured to:
generate the screen (95) on which the diagnosis result (80) is represented by a numerical value (80X), in generating the screen (95).

4. The information processing system (200) according to any one of claims 1 to 3, wherein the processor (11a) is configured to:
generate the screen (95) on which the diagnosis result (80) is represented by a graph in generating the screen (95).

5. The information processing system (200) according to claim 4, wherein the processor (11a) is configured to:
generate the screen (95) on which the diagnosis result (80) and the treatment information (90) are displayed on the graph and the diagnosis result (80) and the treatment information (90) displayed on the graph are arranged in chronological order, in generating the screen (95).

6. The information processing system (200) according to any one of claims 1 to 5, wherein the processor (11a) is configured to:
generate the screen (95) on which a symbol (71) indicating a type of treatment specified by the treatment information (90) is displayed at a display location (50B) of the treatment information (90), in generating the screen (95).

7. The information processing system (200) according to any one of claims 1 to 6, wherein the processor (11a) is configured to:
generate the screen (95) on which treatment information (90) for a treatment specified by a user is displayed and treatment information (90) for a treatment not specified by the user is not displayed, in generating the screen (95).

8. The information processing system (200) according to any one of claims 1 to 7, wherein the processor (11a) is configured to:
generate the screen (95) including information regarding a date and time on which a diagnosis as a base of obtaining the diagnosis result (80) is performed, and information regarding a date and time on which the treatment is performed, in generating the screen (95).

9. The information processing system (200) according to any one of claims 1 to 8, wherein the processor (11a) is configured to:
generate the screen (95) including information indicating whether the treatment performed on the image forming apparatus (100) is a treatment having a positive influence or a treatment having a negative influence on the image forming apparatus (100), in generating the screen (95),
wherein the treatment having the positive influence is a treatment for improving quality of the image formed on the recording medium (P) by the image forming apparatus (100), and the treatment having the negative influence is a treatment for deteriorating the quality of the image formed on the recording medium (P) by the image forming apparatus (100).

10. The information processing system (200) according to any one of claims 1 to 9, wherein the processor (11a) is configured to:
generate the screen (95) including the treatment information (90), the diagnosis result (80) of the diagnosis performed before a specific treatment that is a treatment specified by the treatment information (90), and the diagnosis result (80) of the diagnosis performed after the specific treatment, in generating the screen (95).

11. The information processing system (200) according to claim 10, wherein the processor (11a) is configured to:
generate the screen (95) including the diagnosis result (80) of a diagnosis performed at a closest time to time when the specific treatment is performed among diagnoses performed before the specific treatment, and the diagnosis result (80) of a diagnosis performed at a closest time to the time when the specific treatment is performed among diagnoses performed after the specific treatment, in generating the screen (95).

12. The information processing system (200) according to any one of claims 1 to 11, wherein the processor (11a) is configured to:
generate the screen (95) on which the treatment information (90) for a specific type of treatment among a plurality of types of treatments allowed to be performed on the image forming apparatus (100), and the diagnosis result are displayed, in generating the screen (95).

13. The information processing system (200) according to claim 12, wherein the processor (11a) is configured to:
generate the screen (95) on which the treatment information (90) for a treatment of a type designated by a user among the plurality of types of treatments, and the diagnosis result (80) are displayed, in generating the screen (95).

14. The information processing system (200) according to any one of claims 1 to 13, wherein the processor (11a) is configured to:
in a case where a treatment specified by the treatment information (90) is a treatment of repairing the image forming apparatus (100), generate the screen (95) on which a content of the repair is displayed, in generating the screen (95).

15. A computer program comprising instructions, which when executed by a computer cause said computer to realize:
a function of analyzing a chart image included in a read image data and acquiring a diagnosis result (80) for each of a plurality of predetermined diagnostic items being a result of diagnosing the chart image formed on a recording medium (P) by an image forming apparatus (100);
a function of acquiring treatment information (90) being information regarding a type of treatment performed in the past on the image forming apparatus (100); and
a function of generating a screen (95) on which the diagnosis result (80) and the treatment information (90) are displayed.

## Patentansprüche

1. Informationsverarbeitungssystem (200), **dadurch gekennzeichnet, dass** es umfasst:
einen Prozessor (11a), der so konfiguriert ist, dass er:
ein Chartbild, das in gelesenen Bilddaten enthalten ist, analysiert und ein Diagnoseergebnis (80) für jedes von mehreren vorbestimmten Diagnoseelementen, das ein Ergebnis des Diagnostizierens des Chartbildes ist, das auf einem Aufzeichnungsmedium (P) durch eine Bilderzeugungsvorrichtung (100) erzeugt worden ist, erfasst;
Behandlungsinformationen (90), die Informationen in Bezug auf Typ einer Behandlung sind, die in der Vergangenheit an der Bilderzeugungsvorrichtung (100) durchgeführt worden ist, erfasst; und
einen Bildschirm (95), auf dem das Diagnoseergebnis (80) und die Behandlungsinformationen (90) angezeigt werden, erzeugt.

2. Informationsverarbeitungssystem (200) nach Anspruch 1, wobei der Prozessor (11a) so konfiguriert ist, dass er:
den Bildschirm (95), auf dem das Diagnoseergebnis (80) und die Behandlungsinformationen (90) so angezeigt werden, dass sie in chronologischer Reihenfolge angeordnet sind, beim Erzeugen des Bildschirms (95) erzeugt.

3. Informationsverarbeitungssystem (200) nach Anspruch 1 oder 2, wobei der Prozessor (11a) so konfiguriert ist, dass er:
den Bildschirm (95), auf dem das Diagnoseergebnis (80) durch einen numerischen Wert (80X) dargestellt wird, beim Erzeugen des Bildschirms (95) erzeugt.

4. Informationsverarbeitungssystem (200) nach einem der Ansprüche 1 bis 3, wobei der Prozessor (11a) so konfiguriert ist, dass er:
den Bildschirm (95), auf dem das Diagnoseergebnis (80) durch einen Graphen dargestellt wird, beim Erzeugen des Bildschirms (95) erzeugt.

5. Informationsverarbeitungssystem (200) nach Anspruch 4, wobei der Prozessor (11a) so konfiguriert ist, dass er:
den Bildschirm (95), auf dem das Diagnoseergebnis (80) und die Behandlungsinformationen (90) auf dem Graphen angezeigt werden und das Diagnoseergebnis (80) und die Behandlungsinformationen (90), die auf dem Graphen angezeigt werden, in chronologischer Reihenfolge angeordnet sind, beim Erzeugen des Bildschirms (95) erzeugt.

6. Informationsverarbeitungssystem (200) nach einem der Ansprüche 1 bis 5, wobei der Prozessor (11a) so konfiguriert ist, dass er:
den Bildschirm (95), auf dem ein Symbol (71), das einen Typ von Behandlung, die durch die Behandlungsinformationen (90) spezifiziert ist, angibt, an einer Anzeigeposition (50B) der Behandlungsinformationen (90) angezeigt wird, beim Erzeugen des Bildschirms (95) erzeugt.

7. Informationsverarbeitungssystem (200) nach einem der Ansprüche 1 bis 6, wobei der Prozessor (11a) so konfiguriert ist, dass er:
den Bildschirm (95), auf dem Behandlungsinformationen (90) für eine Behandlung, die von einem Benutzer spezifiziert ist, angezeigt werden und Behandlungsinformationen (90) für eine Behandlung, die nicht von dem Benutzer spezifiziert ist, nicht angezeigt werden, beim Erzeugen des Bildschirms (95) erzeugt.

8. Informationsverarbeitungssystem (200) nach einem der Ansprüche 1 bis 7, wobei der Prozessor (11a) so konfiguriert ist, dass er:
den Bildschirm (95), der Informationen in Bezug auf ein Datum und eine Uhrzeit, zu denen eine Diagnose als eine Basis des Erhaltens des Diagnoseergebnisses (80) durchgeführt wird, und Informationen in Bezug auf ein Datum und eine Uhrzeit, zu denen die Behandlung durchgeführt wird, enthält, beim Erzeugen des Bildschirms (95) erzeugt.

9. Informationsverarbeitungssystem (200) nach einem der Ansprüche 1 bis 8, wobei der Prozessor (11a) so konfiguriert ist, dass er:
den Bildschirm (95), der Informationen enthält, die angeben, ob die auf der Bilderzeugungsvorrichtung (100) durchgeführte Behandlung eine Behandlung mit positivem Einfluss oder eine Behandlung mit negativem Einfluss auf die Bilderzeugungsvorrichtung (100) ist, beim Erzeugen des Bildschirms (95) erzeugt,
wobei die Behandlung mit dem positiven Einfluss eine Behandlung zum Verbessern von Qualität des auf dem Aufzeichnungsmedium (P) durch die Bilderzeugungsvorrichtung (100) erzeugten Bildes ist und die Behandlung mit dem negativen Einfluss eine Behandlung zum Verschlechtern der Qualität des auf dem Aufzeichnungsmedium (P) durch die Bilderzeugungsvorrichtung (100) erzeugten Bildes ist.

10. Informationsverarbeitungssystem (200) nach einem der Ansprüche 1 bis 9, wobei der Prozessor (11a) so konfiguriert ist, dass er:
den Bildschirm (95), der die Behandlungsinformationen (90), das Diagnoseergebnis (80) der Diagnose, die vor einer spezifischen Behandlung, die eine Behandlung, die durch die Behandlungsinformationen (90) spezifiziert ist, ist, durchgeführt wird, und
das Diagnoseergebnis (80) der Diagnose, die nach der spezifischen Behandlung durchgeführt wird, enthält, beim Erzeugen des Bildschirms (95) erzeugt.

11. Informationsverarbeitungssystem (200) nach Anspruch 10, wobei der Prozessor (11a) so konfiguriert ist, dass er:
den Bildschirm (95), der das Diagnoseergebnis (80) einer Diagnose, die zu einem nächsten Zeitpunkt zu einem Zeitpunkt, zu dem die spezifische Behandlung durchgeführt wird, durchgeführt wird, unter Diagnosen, die vor der spezifischen Behandlung durchgeführt werden, und das Diagnoseergebnis (80) einer Diagnose, die zu einem nächsten Zeitpunkt zu dem Zeitpunkt, zu dem die spezifische Behandlung durchgeführt wird, unter Diagnosen, die nach der spezifischen Behandlung durchgeführt werden, enthält, beim Erzeugen des Bildschirms (95) erzeugt.

12. Informationsverarbeitungssystem (200) nach einem der Ansprüche 1 bis 11, wobei der Prozessor (11a) so konfiguriert ist, dass er:
den Bildschirm (95), auf dem die Behandlungsinformationen (90) für einen spezifischen Typ von Behandlung unter mehreren Typen von Behandlungen, die auf der Bilderzeugungsvorrichtung (100) durchgeführt werden dürfen, und das Diagnoseergebnis angezeigt werden, beim Erzeugen des Bildschirms (95) erzeugt.

13. Informationsverarbeitungssystem (200) nach Anspruch 12, wobei der Prozessor (11a) so konfiguriert ist, dass er:
den Bildschirm (95), auf dem die Behandlungsinformationen (90) für eine Behandlung eines Typs, der von einem Benutzer designiert ist, unter den mehreren Typen von Behandlungen und das Diagnoseergebnis (80) angezeigt werden, beim Erzeugen des Bildschirms (95) erzeugt.

14. Informationsverarbeitungssystem (200) nach einem der Ansprüche 1 bis 13, wobei der Prozessor (11a) so konfiguriert ist, dass er:
in einem Fall, in dem eine durch die Behandlungsinformationen (90) spezifizierte Behandlung eine Behandlung des Reparierens der Bilderzeugungsvorrichtung (100) ist, den Bildschirm (95), auf dem ein Inhalt der Reparatur angezeigt wird, beim Erzeugen des Bildschirms (95) erzeugt.

15. Computerprogramm, das Anweisungen umfasst, die, wenn sie von einem Computer ausgeführt werden, den Computer veranlassen, zu realisieren:
eine Funktion des Analysierens eines Chartbildes, das in gelesenen Bilddaten enthalten ist, und des Erfassens eines Diagnoseergebnisses (80) für jedes von mehreren vorbestimmten Diagnoseelementen, die ein Ergebnis des Diagnostizierens des Chartbildes, das auf einem Aufzeichnungsmedium (P) durch eine Bilderzeugungsvorrichtung (100) erzeugt worden ist, sind;
eine Funktion des Erfassens von Behandlungsinformationen (90), die Informationen in Bezug auf einen Typ von Behandlung sind, die in der Vergangenheit an der Bilderzeugungsvorrichtung (100) durchgeführt worden ist; und
eine Funktion des Erzeugens eines Bildschirms (95), auf dem das Diagnoseergebnis (80) und die Behandlungsinformationen (90) angezeigt werden.

## Revendications

1. Système de traitement d'informations (200) **caractérisé en ce qu'**il comprend :
un processeur (11a) configuré pour :
analyser une image de mire incluse dans des données d'images lues et acquérir un résultat de diagnostic (80) pour chacun d'une pluralité d'éléments de diagnostic prédéterminés étant un résultat du diagnostic de l'image de mire formée sur un support d'enregistrement (P) par un appareil de formation d'images (100) ;
acquérir des informations de traitement (90) étant des informations concernant un type de traitement effectué dans le passé sur l'appareil de formation d'images (100) ; et
générer un écran (95) sur lequel le résultat de diagnostic (80) et les informations de traitement (90) sont affichés.

2. Système de traitement d'informations (200) selon la revendication 1, dans lequel le processeur (11a) est configuré pour :
générer l'écran (95) sur lequel le résultat de diagnostic (80) et les informations de traitement (90) sont affichés de manière à être disposés dans un ordre chronologique, lors de la génération de l'écran (95).

3. Système de traitement d'informations (200) selon la revendication 1 ou la revendication 2, dans lequel le processeur (11a) est configuré pour :
générer l'écran (95) sur lequel le résultat de diagnostic (80) est représenté par une valeur numérique (80X), lors de la génération de l'écran (95).

4. Système de traitement d'informations (200) selon l'une quelconque des revendications 1 à 3, dans lequel le processeur (11a) est configuré pour :
générer l'écran (95) sur lequel le résultat de diagnostic (80) est représenté par un graphique lors de la génération de l'écran (95).

5. Système de traitement d'informations (200) selon la revendication 4, dans lequel le processeur (11a) est configuré pour :
générer l'écran (95) sur lequel le résultat de diagnostic (80) et les informations de traitement (90) sont affichés sur le graphique et le résultat de diagnostic (80) et les informations de traitement (90) affichés sur le graphique sont disposés dans un ordre chronologique, lors de la génération de l'écran (95).

6. Système de traitement d'informations (200) selon l'une quelconque des revendications 1 à 5, dans lequel le processeur (11a) est configuré pour :
générer l'écran (95) sur lequel un symbole (71) indiquant un type de traitement spécifié par les informations de traitement (90) est affiché à un emplacement d'affichage (50B) des informations de traitement (90), lors de la génération de l'écran (95).

7. Système de traitement d'informations (200) selon l'une quelconque des revendications 1 à 6, dans lequel le processeur (11a) est configuré pour :
générer l'écran (95) sur lequel des informations de traitement (90) pour un traitement spécifié par un utilisateur sont affichées et des informations de traitement (90) pour un traitement non spécifié par l'utilisateur ne sont pas affichées, lors de la génération de l'écran (95).

8. Système de traitement d'informations (200) selon l'une quelconque des revendications 1 à 7, dans lequel le processeur (11a) est configuré pour :
générer l'écran (95) incluant des informations concernant une date et une heure auxquelles un diagnostic servant de base à l'obtention du résultat de diagnostic (80) est effectué, et des informations concernant une date et une heure auxquelles le traitement est effectué, lors de la génération de l'écran (95).

9. Système de traitement d'informations (200) selon l'une quelconque des revendications 1 à 8, dans lequel le processeur (11a) est configuré pour :
générer l'écran (95) incluant des informations indiquant si le traitement effectué sur l'appareil de formation d'images (100) est un traitement ayant une influence positive ou un traitement ayant une influence négative sur l'appareil de formation d'images (100), lors de la génération de l'écran (95),
dans lequel le traitement ayant l'influence positive est un traitement destiné à améliorer la qualité de l'image formée sur le support d'enregistrement (P) par l'appareil de formation d'images (100), et le traitement ayant l'influence négative est un traitement destiné à détériorer la qualité de l'image formée sur le support d'enregistrement (P) par l'appareil de formation d'images (100).

10. Système de traitement d'informations (200) selon l'une quelconque des revendications 1 à 9, dans lequel le processeur (11a) est configuré pour :
générer l'écran (95) incluant les informations de traitement (90), le résultat de diagnostic (80) du diagnostic effectué avant un traitement spécifique qui est un traitement spécifié par les informations de traitement (90), et le résultat de diagnostic (80) du diagnostic effectué après le traitement spécifique, lors de la génération de l'écran (95).

11. Système de traitement d'informations (200) selon la revendication 10, dans lequel le processeur (11a) est configuré pour :
générer l'écran (95) incluant le résultat de diagnostic (80) d'un diagnostic effectué à un moment le plus proche du moment où le traitement spécifique est effectué parmi les diagnostics effectués avant le traitement spécifique, et le résultat de diagnostic (80) d'un diagnostic effectué à un moment le plus proche du moment où le traitement spécifique est effectué parmi les diagnostics effectués après le traitement spécifique, lors de la génération de l'écran (95).

12. Système de traitement d'informations (200) selon l'une quelconque des revendications 1 à 11, dans lequel le processeur (11a) est configuré pour :
générer l'écran (95) sur lequel les informations de traitement (90) pour un type spécifique de traitement parmi une pluralité de types de traitement autorisés à être effectués sur l'appareil de formation d'images (100), ainsi que le résultat de diagnostic, sont affichés, lors de la génération de l'écran (95).

13. Système de traitement d'informations (200) selon la revendication 12, dans lequel le processeur (11a) est configuré pour :
générer l'écran (95) sur lequel les informations de traitement (90) pour un traitement d'un type désigné par un utilisateur parmi la pluralité de types de traitement, ainsi que le résultat de diagnostic (80), sont affichés, lors de la génération de l'écran (95).

14. Système de traitement d'informations (200) selon l'une quelconque des revendications 1 à 13, dans lequel le processeur (11a) est configuré pour :
dans un cas où un traitement spécifié par les informations de traitement (90) est un traitement de réparation de l'appareil de formation d'images (100), générer l'écran (95) sur lequel un contenu de la réparation est affiché, lors de la génération de l'écran (95).

15. Programme informatique comprenant des instructions, qui, lorsqu'elles sont exécutées par un ordinateur, amènent ledit ordinateur à réaliser :
une fonction consistant à analyser une image de mire incluse dans des données d'images lues et à acquérir un résultat de diagnostic (80) pour chacun d'une pluralité d'éléments de diagnostic prédéterminés étant un résultat du diagnostic de l'image de mire formée sur un support d'enregistrement (P) par un appareil de formation d'images (100) ;
une fonction consistant à acquérir des informations de traitement (90) étant des informations concernant un type de traitement effectué dans le passé sur l'appareil de formation d'images (100) ; et
une fonction consistant à générer un écran (95) sur lequel le résultat de diagnostic (80) et les informations de traitement (90) sont affichés.
